# EUROPEAN PATENT APPLICATION

(11) **EP 4 257 553 A1**
(43) Date of publication of application: **11.10.2023**
(21) Application number: 21900301.9
(22) Date of filing: 18.10.2021
(51) Int. Cl.: C01G 45/12, H01M 4/131, H01M 4/505, H01M 4/66, H01M 10/0525, H01M 10/058

(54) **POSITIVE ELECTRODE ACTIVE MATERIAL, LITHIUM SECONDARY BATTERY, AND METHOD FOR PRODUCING POSITIVE ELECTRODE ACTIVE MATERIAL**

(30) Priority: 02.12.2020 JP 2020200588
(71) Applicant: Panasonic Intellectual Property Management Co., Ltd., Kadoma-shi, Osaka 571-0057 (JP)
(72) Inventor: FUJIMOTO Masahisa, Kadoma-shi, Osaka 571-0057 (JP); OTO Takashi, Kadoma-shi, Osaka 571-0057 (JP)
(74) Representative: Novagraaf International SA
(86) International application number: PCT/JP2021/038343
(87) International publication number: WO 2022/118545

(57) **Abstract**

A positive electrode active material includes LiₓMn_{y}O₂, wherein 1.012 ≥ x ≥ 0.683 and 0.91 ≤ y ≤ 1.0.

## Description

### TECHNICAL FIELD

The present disclosure relates to a positive electrode active material, a lithium secondary battery, and a method for producing the positive electrode active material.

### BACKGROUND ART

Manganese dioxide having a tunnel structure or a layered structure is known as one positive electrode active material for a lithium secondary battery. Manganese dioxide has various crystal structures, such as α-MnO₂, β-MnO₂, and γ-MnO₂. Manganese dioxide is represented in chemical formulae as "MnO₂", but is actually a non-stoichiometric compound.

Since manganese dioxide does not contain Li, a lithium secondary battery using manganese dioxide as the positive electrode active material must be in a charged state upon completion of assembly. That is, since it is difficult to use graphite as a negative electrode active material, it is necessary to use Li metal, a LiAl alloy, or the like as the negative electrode active material.

As is known to those skilled in the art, lithium secondary batteries using Li metal as the negative electrode active material have poor reversibility. When a Li alloy such as a LiAl alloy is used instead of Li metal, cycle characteristics at a shallow depth are favorable. However, when charging and discharging are repeated at a deep depth, the battery reaches the end of its life after a small number of charge and discharge cycles. Therefore, a lithium secondary battery using manganese dioxide as the positive electrode active material has been put to practical use only in applications in which charging and discharging are repeated at a shallow depth, for example, memory backup applications.

PTL 1 discloses that a product obtained by mixing and sintering LiOH and MnO₂ is used as the positive electrode active material. While at first glance the product appears to include LiMnO₂, in reality, the valence of Mn barely changes from 4 and Li is barely doped into MnO₂. That is, even when the raw material powders are mixed and fired, LiMnO₂ is not generated, or if generated, only in a very small amount. Therefore, in the examples of PTL 1, a LiPb alloy is used as the negative electrode active material and the battery starts from discharge after assembly.

NPL 1 demonstrates that the product obtained by mixing and sintering LiOH and MnO₂ is a composite of Li₂MnO₃ and MnO₂.

### Citation List

### Patent Literature

PTL 1: Unexamined Japanese Patent Publication No. H3-43968

### Non-Patent Literature

NPL 1: Nobohiro Furukawa, Toshiyuki Nohma, Kazuo Teraji, Ikuro Nakane, Yuji Yamamoto, Toshihiko Saito; "Lithium-Containing Manganese Dioxide as a Cathode Active Material for Lithium Secondary Batteries"; Electrochemistry and Industrial Physical Chemistry, 57, No. 6, pp. 533-538 (1989)

### SUMMARY OF THE INVENTION

In view of the above situation, the present disclosure provides LiMnO₂ containing lithium in advance.

The present disclosure provides a positive electrode active material including LiₓMn_{y}O₂, wherein 1.012 ≥ x ≥ 0.683 and 0.91 ≤ y ≤ 1.0.

According to the present disclosure, since the positive electrode active material includes LiₓMn_{y}O₂ containing lithium in advance, it is possible to construct a lithium secondary battery using various negative electrode active materials.

### BRIEF DESCRIPTION OF THE DRAWINGS

Fig. 1 is a cross-sectional view of a lithium secondary battery according to one exemplary embodiment of the present disclosure.
Fig. 2 is a process diagram illustrating a method for producing a positive electrode active material.
Fig. 3A is a charge-discharge curve at a first cycle of the lithium secondary battery of Example 1.
Fig. 3B is a charge-discharge curve at a second cycle of the lithium secondary battery of Example 1.
Fig. 3C is a graph illustrating a relationship between a discharge capacitance density and a number of discharge cycles of the lithium secondary battery of Example 1.
Fig. 4A is a charge-discharge curve at a first cycle of a lithium secondary battery of Example 2.
Fig. 4B is a charge-discharge curve at a second cycle of the lithium secondary battery of Example 2.
Fig. 4C is a graph illustrating a relationship between a discharge capacitance density and a number of discharge cycles of the lithium secondary battery of Example 2.
Fig. 5A is a charge-discharge curve at a first cycle of a lithium secondary battery of Example 3.
Fig. 5B is a charge-discharge curve at a second cycle of the lithium secondary battery of Example 3.
Fig. 5C is a graph illustrating a relationship between a discharge capacitance density and a number of discharge cycles of the lithium secondary battery of Example 3.
Fig. 6A is a charge-discharge curve at a first cycle of a lithium secondary battery of Example 4.
Fig. 6B is a charge-discharge curve at a second cycle of the lithium secondary battery of Example 4.
Fig. 6C is a graph illustrating a relationship between a discharge capacitance density and a number of discharge cycles of the lithium secondary battery of Example 4.
Fig. 7A is a discharge curve at a first cycle of a lithium secondary battery of Reference Example 1.
Fig. 7B is a charge curve at the first cycle of the lithium secondary battery of Reference Example 1.
Fig. 8 is a diagram illustrating powder X-ray diffraction patterns of the positive electrode active materials of Example 2 and Reference Example 1.

### DESCRIPTION OF EMBODIMENT

### (Knowledge underlying the present disclosure)

Normally, a secondary battery is required to be sufficiently resistant to charging and discharging at a deep depth. In one example, MnO₂ may be used for a positive electrode and LiC₆ with Li occluded in advance may be used for a negative electrode. However, since preparing LiCe is complicated, it is not practical to use LiCe for the negative electrode. Therefore, in order to exhibit satisfactory cycle characteristics at a deep depth using graphite, which is excellent in reversibility, for the negative electrode, it is necessary to include a sufficient amount of Li in MnO₂ as the positive electrode active material and to change the valence of Mn to about 3.

Even when an attempt is made to produce LiMnO₂ by a conventional method such as is described in PTL 1, Mn is barely reduced and the valence remains at about 4. Since the valence of Mn is close to 4, it is virtually impossible to extract Li from a compound such as Li₂MnO₃, even when Li is contained.

Therefore, LiMnO₂ that contains lithium in advance and can start from charging is required.

### (Overview of one aspect according to the present disclosure)

A positive electrode active material according to a first aspect of the present disclosure includes LiₓMn_{y}O₂, wherein 1.012 ≥ x ≥ 0.683 and 0.91 ≤ y ≤ 1.0. Since the positive electrode active material includes LiₓMn_{y}O₂ containing lithium in advance, various negative electrode active materials can be used. A lithium secondary battery using LiₓMn_{y}O₂ as the positive electrode active material can start from charging.

In a second aspect of the present disclosure, for example, in the positive electrode active material according to the first aspect, a relationship of 1.012 ≥ x ≥ 0.864 may be satisfied. In this case, a capacity density of the lithium secondary battery is further increased.

In a third aspect of the present disclosure, for example, the valence of Mn in the positive electrode active material according to the first or second aspect may be between 2.987 and 3.316 (inclusive). When the valence of Mn changes between 3 and 4, the lithium secondary battery is smoothly charged and discharged.

In a fourth aspect of the present disclosure, for example, in the positive electrode active material according to any one of the first to third aspects, the valence of Mn may be between 2.987 and 3.136 (inclusive).

A method for producing a positive electrode active material according to a fifth aspect of the present disclosure includes bringing MnO₂ into contact with a lithium solution of lithium metal dissolved in an organic solvent.

The method of the present disclosure makes use of the fact that an organic solvent in which Li metal has been dissolved has a high reducing power. The reducing power of the lithium solution lowers the valence of Mn of MnO₂ to 3 and dopes MnO₂ with Li ions in the form of charge compensation. MnO₂ is reduced to a valence of 3 due to electrochemical reduction (discharge). One electron of Li is taken into MnO₂.

In a sixth aspect of the present disclosure, for example, in the method for producing the positive electrode active material according to the fifth aspect, MnO₂ may include at least one selected from the group consisting of γ-β-MnO₂, ramsdellite, and β-MnO₂. Ramsdellite, γ-β-MnO₂ that can be produced from electrolytic manganese dioxide, and β-MnO₂ that can also be produced from electrolytic manganese dioxide all have a tunnel structure and are inexpensive and readily available.

In a seventh aspect of the present disclosure, for example, in the method for producing the positive electrode active material according to the fifth or sixth aspect, the organic solvent may include at least one selected from the group consisting of glyme and a chain carbonate.

In an eighth aspect of the present disclosure, for example, in the method for producing the positive electrode active material according to the fifth or sixth aspect, the organic solvent may include at least one selected from the group consisting of triglyme, dimethoxyethane, and methyl ethyl carbonate.

In a ninth aspect of the present disclosure, for example, in the method for producing the positive electrode active material according to the fifth or sixth aspect, the organic solvent may include a mixture of triglyme and methyl ethyl carbonate. When the mixture of triglyme and methyl ethyl carbonate is used, a lithium solution having a high reducing power can be prepared, therefore doping of lithium into MnO₂ can be rapidly advanced.

In a tenth aspect of the present disclosure, for example, in the method for producing the positive electrode active material according to the fifth or sixth aspect, the organic solvent may include a mixture of dimethoxyethane and methyl ethyl carbonate. When the mixture of dimethoxyethane and methyl ethyl carbonate is used, a lithium solution having a high reducing power can be prepared, therefore doping of lithium into MnO₂ can be rapidly advanced.

In an eleventh aspect of the present disclosure, for example, in the method for producing the positive electrode active material according to any one of the fifth to tenth aspects, the lithium solution may further include an aromatic compound. The solution in which the aromatic compound has been dissolved has a property of releasing solvated electrons of lithium and dissolving lithium as a cation.

In a twelfth aspect of the present disclosure, for example, in the method for producing the positive electrode active material according to the eleventh aspect, the aromatic compound may include benzophenone.

A lithium secondary battery according to a thirteenth aspect of the present disclosure is provided with a positive electrode including the positive electrode active material according to any one of the first to fourth aspects. Since the positive electrode active material includes LiₓMn_{y}O₂ containing lithium in advance, various negative electrode active materials can be used.

In a fourteenth aspect of the present disclosure, for example, in the lithium battery according to the thirteenth aspect, the positive electrode may include a positive electrode current collector made of aluminum. Aluminum and an aluminum alloy are suitable for a material of the positive electrode current collector as they are inexpensive and easily formed into a thin film.

In a fifteenth aspect of the present disclosure, for example, the lithium battery according to the thirteenth or fourteenth aspect may be in a discharged state upon completion of assembly, and may be capable of starting from charging. According to such a configuration, a material having excellent cycle characteristics such as graphite can be used as the negative electrode active material.

In a sixteenth aspect of the present disclosure, for example, the lithium battery according to any one of the thirteenth to fifteenth aspects may further include a negative electrode including graphite. Graphite is particularly recommended as it is less likely to deteriorate even when charging and discharging are repeated at a deep depth.

In a seventeenth aspect of the present disclosure, for example, in the lithium battery according to the sixteenth aspect, the negative electrode does not need to contain lithium upon completion of assembly. According to such a configuration, a material having excellent cycle characteristics such as graphite can be used as the negative electrode active material.

Hereinafter, an exemplary embodiment of the present disclosure will be described with reference to the drawings. The present disclosure is not limited to the following exemplary embodiment.

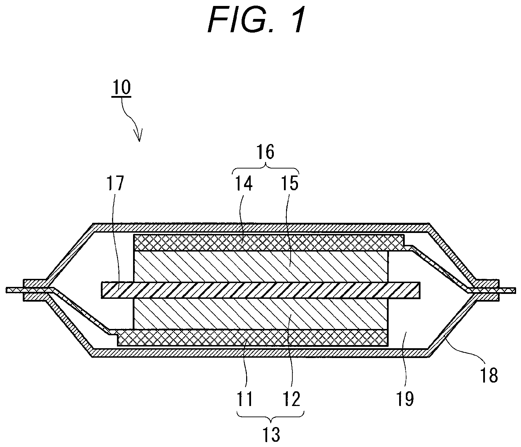

Fig. 1 is a cross-sectional view of a lithium secondary battery according to one exemplary embodiment of the present disclosure. Lithium secondary battery 10 of the present exemplary embodiment includes negative electrode 13, positive electrode 16, non-aqueous electrolyte 19, separator 17, and exterior 18. Negative electrode 13 includes negative electrode current collector 11 and negative electrode active material layer 12. Negative electrode active material layer 12 is provided on negative electrode current collector 11. Positive electrode 16 includes positive electrode current collector 14 and positive electrode active material layer 15. Positive electrode active material layer 15 is provided on positive electrode current collector 14. Separator 17 is disposed between negative electrode 13 and positive electrode 16. Negative electrode 13 and positive electrode 16 face each other via separator 17. Negative electrode 13, positive electrode 16, separator 17, and non-aqueous electrolyte 19 are housed in exterior 18.

Negative electrode active material layer 12 may include a negative electrode active material capable of occluding and releasing lithium ions. Examples of the negative electrode active material capable of occluding and releasing lithium ions include graphite, silicon, silicon-containing oxide, zinc alloy, lithium metal, and lithium alloy. One type selected from these negative electrode active materials may be used, or two or more types selected from these negative electrode active materials may be used in combination.

Negative electrode active material layer 12 may include graphite as the negative electrode active material. Graphite may be used alone as the negative electrode active material. Graphite is particularly recommended as it is less likely to deteriorate even when charging and discharging are repeated at a deep depth. Negative electrode active material layer 12 may include graphite only as the negative electrode active material. A carbon material other than graphite may be used as the negative electrode active material.

Negative electrode 13 does not necessarily contain lithium upon completion of assembly of lithium secondary battery 10. In the present exemplary embodiment, lithium secondary battery 10 is in a discharged state upon completion of assembly and can start from charging. That is, a material having excellent cycle characteristics such as graphite can be used as the negative electrode active material. "Upon completion of assembly" refers to an arbitrary time point in a period from the time point when manufacturing of lithium secondary battery 10 is completed to when an external power source is connected to lithium secondary battery 10 to perform a charging and discharging process.

Negative electrode active material layer 12 may include a conductive assistant, an ion conductor, a binder, and the like.

The conductive assistant and the ion conductor are used to reduce the resistance of negative electrode 13. A carbon material (carbon conductive assistant) such as carbon black, graphite, acetylene black, carbon nanotubes, carbon nanofibers, graphene, fullerene, or graphite oxide, or a conductive polymer compound such as polyaniline, polypyrrole, or polythiophene can be used as the conductive assistant. Gel electrolytes such as polymethyl methacrylate or polymethyl methacrylate, organic solid electrolytes such as polyethylene oxide, or inorganic solid electrolytes such as Li₇La₃Zr₂O₁₂ can be used as the ion conductor.

The binder is used to improve the binding property of the material constituting negative electrode 13. A polymer material such as polyvinylidene fluoride, vinylidene fluoride-hexafluoropropylene copolymer, vinylidene fluoride-tetrafluoroethylene copolymer, polytetrafluoroethylene, carboxymethyl cellulose, polyacrylic acid, styrenebutadiene copolymer rubber, polypropylene, polyethylene, or polyimide can be used as the binder.

A sheet or film made of a metal material such as stainless steel, nickel, copper, or an alloy of stainless steel, nickel, or copper can be used as negative electrode current collector 11. The sheet or film may be porous or non-porous. A metal foil, a metal mesh, or the like can be used as the sheet or film. A surface of negative electrode current collector 11 may be coated with a carbon material, such as carbon, as a conductive auxiliary material.

Positive electrode active material layer 15 includes LiₓMn_{y}O₂, wherein 1.012 ≥ x ≥ 0.683 and 0.91 ≤ y ≤ 1.0, as the positive electrode active material. Specifically, upon completion of assembly of lithium secondary battery 10, the positive electrode active material has a composition of LiₓMn_{y}O₂, wherein 1.012 ≥ x ≥ 0.683 and 0.91 ≤ y ≤ 1.0. Since the positive electrode active material includes LiₓMn_{y}O₂ containing lithium in advance, various negative electrode active materials can be used. When LiₓMn_{y}O₂ is used as the positive electrode active material and graphite is used as the negative electrode active material, lithium secondary battery 10 is in a discharged state upon completion of assembly. Therefore, lithium secondary battery 10 can start from charging after assembly. Positive electrode active material layer 15 may include a positive electrode active material other than LiₓMn_{y}O₂, or it may include only LiₓMn_{y}O₂ as the positive electrode active material.

Note that in manganese dioxide MnO_{z}, the value of z can be 1.92 ≤ z ≤ 2.0 (see, for example, Toyo Soda Research Report, Vol. 20, No. 2, P. 133, Table 1). When this is converted into Mn_{y}O₂, the value of y is 1.82/2.0 ≤ y ≤ 2.0/2.0, that is, 0.91 ≤ y ≤ 1.0, therefore in LiₓMn_{y}O₂, y satisfies 0.91 ≤ y ≤ 1.0. The value of y may be, for example, y = 1.

In LiₓMn_{y}O₂, a relationship of 1.012 ≥ x ≥ 0.864 may be satisfied. In this case, the capacity density of lithium secondary battery 10 is further increased.

In LiₓMn_{y}O₂, the valence of Mn is, for example, between 2.987 and 3.316 (inclusive). When the valence of Mn changes between 3 and 4, lithium secondary battery 10 is smoothly charged and discharged. The valence of Mn may be between 2.987 and 3.136 (inclusive).

Positive electrode active material layer 15 may include a conductive assistant, an ion conductor, a binder, and the like. The same materials as the materials that can be used as the conductive assistant, the ion conductor, and the binder in negative electrode active material layer 12 can be used in positive electrode active material layer 15.

A sheet or film made of a metal material such as aluminum, stainless steel, titanium, or an alloy of aluminum, stainless steel, or titanium can be used as positive electrode current collector 14. Aluminum and an aluminum alloy are suitable for the material of positive electrode current collector 14 as they are inexpensive and easily formed into a thin film. The sheet or film may be porous or non-porous. A metal foil, a metal mesh, or the like can be used as the sheet or film. A surface of positive electrode current collector 14 may be coated with a carbon material, such as carbon, as a conductive auxiliary material.

Non-aqueous electrolyte 19 is, for example, an electrolytic solution that is impregnated into negative electrode 13, positive electrode 16, and separator 17. Non-aqueous electrolyte 19 may be filled in an internal space of exterior 18. The action of non-aqueous electrolyte 19 allows lithium ions to move between negative electrode 13 and positive electrode 16.

Non-aqueous electrolyte 19 includes a non-aqueous solvent and a lithium salt.

A cyclic carbonate ester, a chain carbonate ester, an ester, a cyclic ether, a chain ether, a nitrile, an amide, and the like can be used as the non-aqueous solvent. One type selected from these solvents may be used, or two or more types selected from these solvents may be used in combination.

Lithium hexafluorophosphate (LiPF₆), lithium tetrafluoroborate (LiBF₄), lithium perchlorate (LiClO₄), lithium bis(fluorosulfonyl)imide (LiFSI), lithium bis(trifluoromethanesulfonyl)imide (LiTFSI), lithium bisperfluoroethylsulfonyl imide (LiN(SO₂C₂F₅)₂), LiAsF₆, LiCF₃SO₃, and lithium difluoro(oxalato)borate can be used as the lithium salts. One type selected from these electrolyte salts may be used, or two or more types selected from these electrolyte salts may be used in combination.

Separator 17 has lithium ion conductivity. The material of separator 17 is not particularly limited, as long as lithium ions are allowed to pass through the material. The material of separator 17 may be at least one selected from the group consisting of solid electrolytes, gel electrolytes, an ion exchange resin membrane such as a lithium cation exchange resin, a semipermeable membrane, and a porous membrane. When separator 17 is made of these materials, the safety of lithium secondary battery 10 can be sufficiently ensured. Examples of the solid electrolytes include sulfide solid electrolytes such as Li₂S-P₂S₅, and oxidic solid electrolytes such as Li₇La₃Zr₂O₁₂ (LLZ). Examples of the gel electrolytes include gel electrolytes including a fluororesin such as PVdF. Examples of the ion exchange resin membrane include a cation exchange membrane and an anion exchange membrane. Examples of the porous membrane include a porous membrane made of a polyolefin resin and a porous membrane made of glass paper obtained by weaving glass fibers into a nonwoven fabric.

Exterior 18 is made of, for example, a material obtained by laminating a metal foil, such as an aluminum foil, with a resin film, such as a PET film. Exterior 18 may be a container made of resin or metal.

A shape of lithium secondary battery 10 is not particularly limited. Various shapes such as a coin shape, a cylindrical shape, a square shape, a sheet shape, a button shape, a flat shape, and a laminated shape may be adopted for the shape of lithium secondary battery 10.

Lithium secondary battery 10 may be an all-solid-state battery.

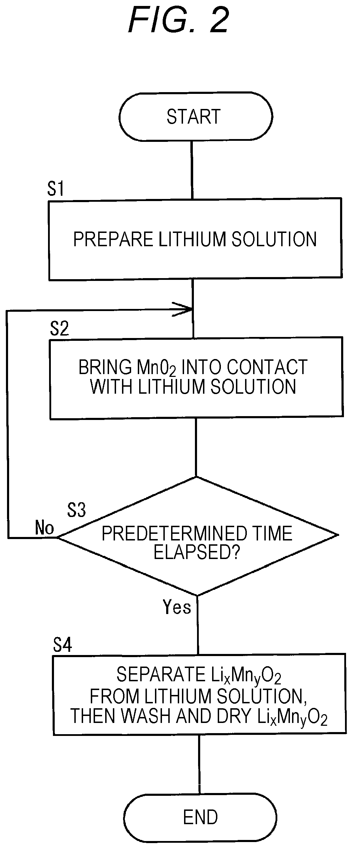

Next, a method for producing the positive electrode active material will be described. Fig. 2 is a process diagram illustrating the method for producing the positive electrode active material.

In step S1, lithium metal is dissolved in an organic solvent to prepare a lithium solution. The lithium solution exhibits a high reducing power. At least one selected from the group consisting of glyme and a chain carbonate can be used as the organic solvent. These solvents are capable of dissolving an aromatic compound such as benzophenone. When lithium metal is added to a solution prepared from these solvents and the aromatic compound such as benzophenone, lithium metal gives up valence electrons to the solution and becomes ions. The solution that has received the electrons is in a state of being solvated with the electrons, while lithium metal is in a state of being dissolved in the solution. A potential of the solution is close to the potential of lithium metal, however the potential value varies depending on the combination of the aromatic compound and the solvent.

At least one selected from the group consisting of dimethoxyethane, diglyme, triglyme, tetraglyme, and polyethylene glycol dimethyl ether can be used as the glyme. At least one selected from the group consisting of methyl ethyl carbonate, diethyl carbonate, and dimethyl carbonate can be used as the chain carbonate.

Typically, the organic solvent includes at least one selected from the group consisting of triglyme, dimethoxyethane and methyl ethyl carbonate.

The lithium solution may further include an aromatic compound. The solution that the aromatic compound is dissolved into has a property of releasing solvated electrons of lithium and dissolving lithium as a cation. In other words, the aromatic compound has a property of receiving an electron released when lithium is dissolved in the organic solvent as a solvated electron and dissolving in the solvent of the lithium solution. A substance amount of lithium equal to the substance amount of the aromatic compound may be dissolved in the organic solvent. For example, when the concentration of the aromatic compound in the lithium solution is 1 mol/liter, the concentration of lithium in the lithium solution is also approximately 1 mol/liter.

At least one selected from the group consisting of benzophenone, biphenyl, phenanthrene, naphthalene, anthracene, o-terphenyl, triphenylene, trans-stilbene, 2,2'-bipyridine, 4,4'-bipyridine, 3,3'-bipyridine, 2,3'-bipyridine, 2,4'-bipyridine, 3,4'-bipyridine, 1,10-phenanthroline, cis-stilbene, and fluorene can be used as the aromatic compound. The aromatic compound may typically be benzophenone. An immersion time of MnO₂ in the lithium solution is adjusted in accordance with a type and concentration of the aromatic compound.

The organic solvent may include a mixture of triglyme and methyl ethyl carbonate. When the mixture of triglyme and methyl ethyl carbonate is used, a lithium solution having a high reducing power can be prepared, therefore doping of lithium into MnO₂ can be rapidly advanced. A mixing ratio of triglyme and methyl ethyl carbonate is not particularly limited and may be adjusted in a range satisfying 0.1 ≤ (triglyme/methyl ethyl carbonate) <_ 0.9 in terms of volume ratio. The organic solvent may include only triglyme and methyl ethyl carbonate as solvents.

The organic solvent may include a mixture of dimethoxyethane and methyl ethyl carbonate. When the mixture of dimethoxyethane and methyl ethyl carbonate is used, a lithium solution having a high reducing power can be prepared, therefore doping of lithium into MnO₂ can be rapidly advanced. A mixing ratio of dimethoxyethane and methyl ethyl carbonate is not particularly limited and may be adjusted in a range satisfying 0.1 ≤ (dimethoxyethane/methyl ethyl carbonate) <_ 0.9 in terms of volume ratio. The organic solvent may include only dimethoxyethane and methyl ethyl carbonate as solvents.

In step S2, MnO₂ is brought into contact with the lithium solution. Typically, MnO₂ is immersed in the lithium solution. In this way, lithium is doped into MnO₂ having a layered structure or a tunnel structure to produce LiₓMn_{y}O₂. The valence of Mn is reduced from 4 to 3. MnO₂ may be formed into an electrode shape. That is, an electrode including MnO₂ as an active material may be immersed in the lithium solution. The lithium solution may be heated to a temperature higher than room temperature to increase the reaction rate.

The crystal structure of MnO₂ is not particularly limited. MnO₂ having various crystal structures such as α-MnO₂, β-MnO₂, γ-MnO₂, ε-MnO₂, λ-MnO₂, δ-MnO₂, γ-β-MnO₂, and R-MnO₂ (ramsdellite-type manganese dioxide) can be used. MnO₂ may include a plurality of crystal phases, or it may be a mixed crystal. MnO₂ may include at least one selected from the group consisting of γ-β-MnO₂, ramsdellite, and β-MnO₂. Ramsdellite, γ-β-MnO₂ that can be produced from electrolytic manganese dioxide, and β-MnO₂ that can also be produced from electrolytic manganese dioxide all have a tunnel structure and are inexpensive and readily available. In particular, γ-β-MnO₂ exhibits a highest discharge capacity density when used as an active material of a primary battery. In other words, Mn is easy to reduce. Note that γ-β-MnO₂ represents a mixed crystal of γ-MnO₂ and β-MnO₂.

After MnO₂ is immersed in the lithium solution, the process waits until a predetermined time elapses in step S3. The "predetermined time" is a time required for doping lithium into MnO₂ until LiₓMn_{y}O₂, wherein 1.012 ≥ x ≥ 0.683 or 0.864, is satisfied. A reduction rate of Mn varies depending on conditions such as an intensity of reducibility of the lithium solution, a concentration of lithium in the lithium solution, a temperature of the lithium solution, and a shape (powder or molded body) of MnO₂. Therefore, the optimal predetermined time is experimentally investigated in advance.

After the predetermined time has elapsed, LiₓMn_{y}O₂ and the lithium solution are separated from each other in step S4. LiₓMn_{y}O₂ is washed and dried. In this way, LiₓMn_{y}O₂, wherein 1.012 ≥ x ≥ 0.683 and 0.91 ≤ y ≤ 1.0, is obtained as the positive electrode active material. Lithium secondary battery 10 described with reference to Fig. 1 can be manufactured using the obtained LiₓMn_{y}O₂ as the positive electrode active material. That is, lithium secondary battery 10 can be manufactured using LiₓMn_{y}O₂, wherein 1.012 ≥ x ≥ 0.683 and 0.91 ≤ y ≤ 1.0, as the positive electrode active material and graphite as the negative electrode active material. Lithium secondary battery 10 is in a discharged state upon completion of assembly and can start from charging.

### EXAMPLES

### (Example 1)

PVdF as a binder, γ-β-MnO₂ powder, and a solvent were mixed to prepare a slurry. The slurry was applied to an Al current collector to form a coating film. The coating film was dried and rolled to obtain an electrode having a size of 2 cm × 2 cm.

Benzophenone and methyl ethyl carbonate were mixed to prepare a mixed solution. A concentration of benzophenone in the mixed solution was 1 mol/liter. Li metal was dissolved to a saturation concentration in the mixed solution to prepare the lithium solution. A concentration of lithium in the lithium solution was 1 mol/liter.

The electrode was immersed in the above-described lithium solution for 137.9 days. After 137.9 days had passed, the electrode was removed from the lithium solution, washed with methyl ethyl carbonate, and dried in a vacuum. In this way, the positive electrode of Example 1 was obtained.

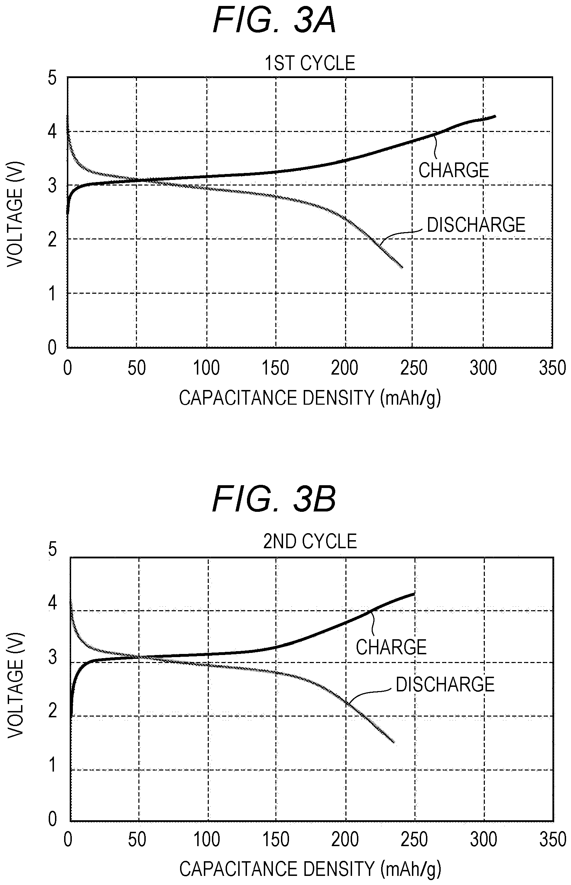

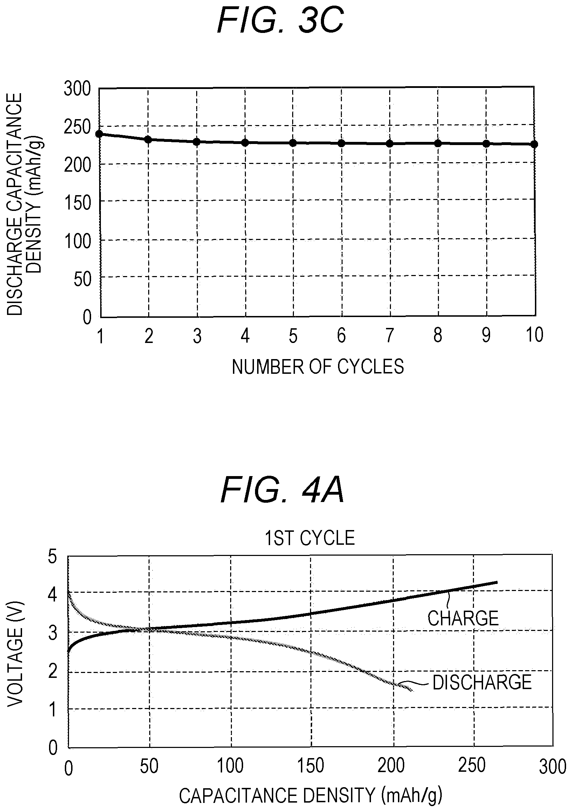

The lithium secondary battery of Example 1 was produced using Li metal and an electrolytic solution as the positive electrode and the negative electrode of Example 1. The electrolytic solution was prepared by dissolving LiPF₆ at a concentration of 1 mol/liter in an organic solvent including ethylene carbonate and methyl ethyl carbonate in a volume ratio of 1 : 1. The obtained lithium secondary battery was subjected to a charging and discharging test. The test began with charging. A charge-discharge current was 0.05 mA, a charge termination voltage was 4.3 V, and a discharge termination voltage was 1.5 V. The results are illustrated in Fig. 3A, Fig. 3B, and Fig. 3C.

Fig. 3A is a charge-discharge curve at a first cycle of the lithium secondary battery of Example 1. Fig. 3B is a charge-discharge curve at a second cycle of the lithium secondary battery of Example 1. Fig. 3C is a graph illustrating a relationship between a discharge capacitance density and a number of discharge cycles of the lithium secondary battery of Example 1. In Fig. 3A and Fig. 3B, the horizontal axis represents a capacitance density (mAh/g) of the lithium secondary battery and the vertical axis represents a voltage (V). In Fig. 3C, the horizontal axis represents a number of discharges (number of cycles) and the vertical axis represents a discharge capacitance density (mAh/g).

As illustrated in Fig. 3A, the lithium secondary battery of Example 1 was in a discharged state immediately after assembly and was able to be charged from the first cycle. This indicates that a sufficient amount of lithium has been doped into MnO₂ to form LiMnO₂.

As illustrated in Fig. 3A and Fig. 3B, the discharge capacitance density at the first cycle was almost the same as the discharge capacitance density at the second cycle. As illustrated in Fig. 3C, the discharge capacitance density barely changed even when charging and discharging was repeated for 10 cycles.

A substance amount of Li doped into MnO₂ during a reduction treatment and a valence of Mn were calculated from a charge capacitance density at the first cycle (309.5 mAh/g). As a result, the substance amount of doped Li was 1.012 mol with respect to 1 mol of MnO₂. The valence of Mn after the reduction treatment was 2.987.

### (Example 2)

A mixed solution was prepared by adding benzophenone at a concentration of 1 mol/liter to a mixed solvent including triglyme and methyl ethyl carbonate at a volume ratio of 1 : 1. Li metal was dissolved in the mixed solution to prepare a lithium solution. A concentration of lithium in the lithium solution was 1 mol/liter.

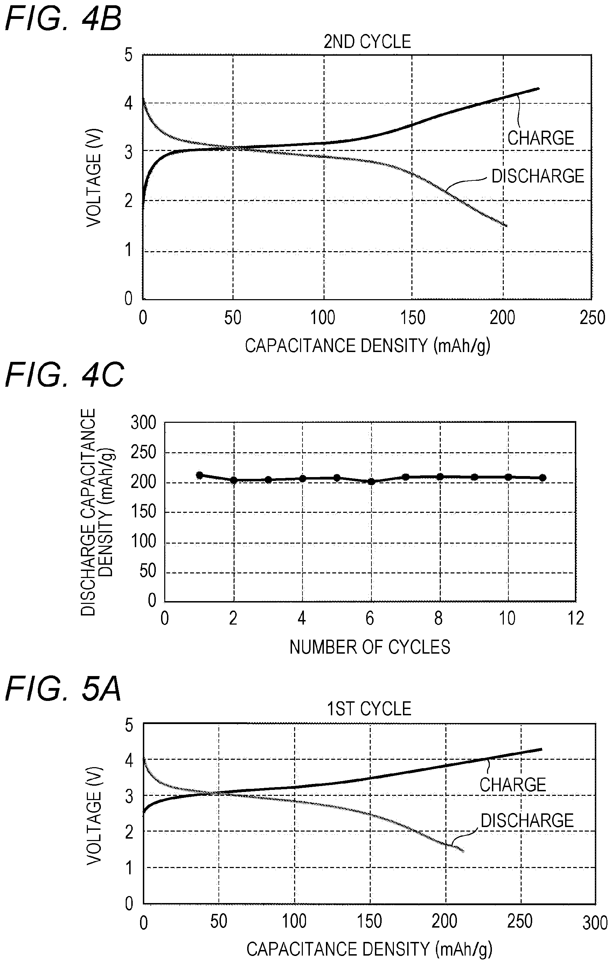

The same electrode as in Example 1 was immersed in the above-described lithium solution for 1.8 days. Thereafter, the lithium secondary battery of Example 2 was produced in the same manner as in Example 1, and a charging and discharging test was performed. The results are illustrated in Fig. 4A, Fig. 4B, and Fig. 4C. Fig. 4A, Fig. 4B, and Fig. 4C are graphs illustrating the test results of the same items as Fig. 3A, Fig. 3B, and Fig. 3C, respectively.

As illustrated in Fig. 4A, the lithium secondary battery of Example 2 was in a discharged state immediately after assembly and was able to be charged from the first cycle. As illustrated in Fig. 4C, the discharge capacitance density barely changed even when charging and discharging was repeated for 10 cycles.

The substance amount of Li doped into MnO₂ during the reduction treatment and the valence of Mn were calculated from the charge capacitance density at the first cycle (276 mAh/g). As a result, the substance amount of doped Li was 0.905 mol with respect to 1 mol of MnO₂. The valence of Mn after the reduction treatment was 3.094. The time for the reduction treatment in Example 2 was 1.8 days, which was significantly shorter than the time for the reduction treatment in Example 1.

### (Example 3)

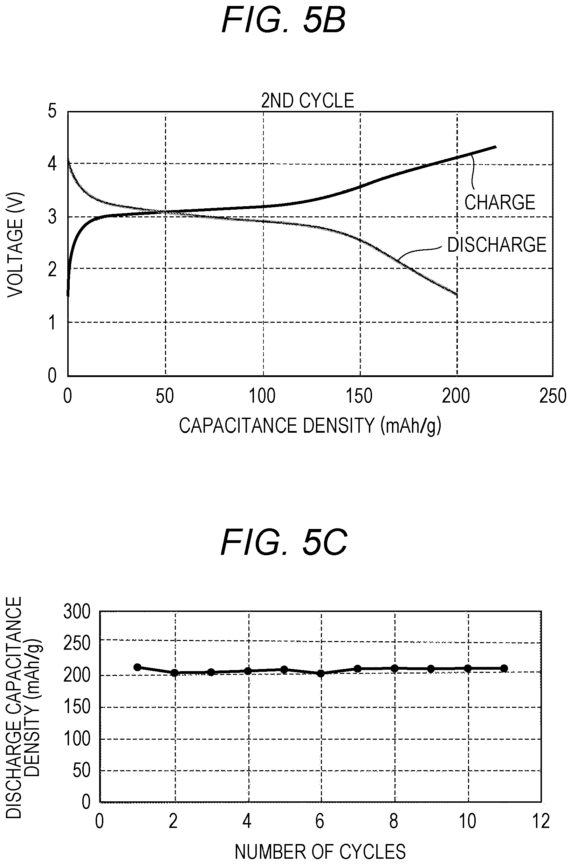

The lithium secondary battery of Example 3 was produced in the same manner as in Example 2, except that the immersion time of the electrode in the lithium solution was changed to 2.8 days, then the charging and discharging test was performed. The results are illustrated in Fig. 5A, Fig. 5B, and Fig. 5C. Fig. 5A, Fig. 5B, and Fig. 5C are graphs illustrating the test results of the same items as Fig. 3A, Fig. 3B, and Fig. 3C, respectively.

As illustrated in Fig. 5A, the lithium secondary battery of Example 3 was in a discharged state immediately after assembly and was able to be charged from the first cycle. As illustrated in Fig. 5C, the discharge capacitance density barely changed even when charging and discharging was repeated for 10 cycles.

The substance amount of Li doped into MnO₂ during the reduction treatment and the valence of Mn were calculated from the charge capacitance density at the first cycle (276 mAh/g). As a result, the substance amount of doped Li was 0.864 mol with respect to 1 mol of MnO₂. The valence of Mn after the reduction treatment was 3.136. The time for the reduction treatment in Example 3 was 2.8 days, which was significantly shorter than the time for the reduction treatment in Example 1.

### (Example 4)

A treatment liquid was prepared by adding benzophenone at a concentration of 1 mol/liter to a solvent mixture including dimethoxyethane and methyl ethyl carbonate at a volume ratio of 1 : 1. Li metal was dissolved in the treatment liquid to prepare a lithium solution. The concentration of lithium in the lithium solution was 1 mol/liter.

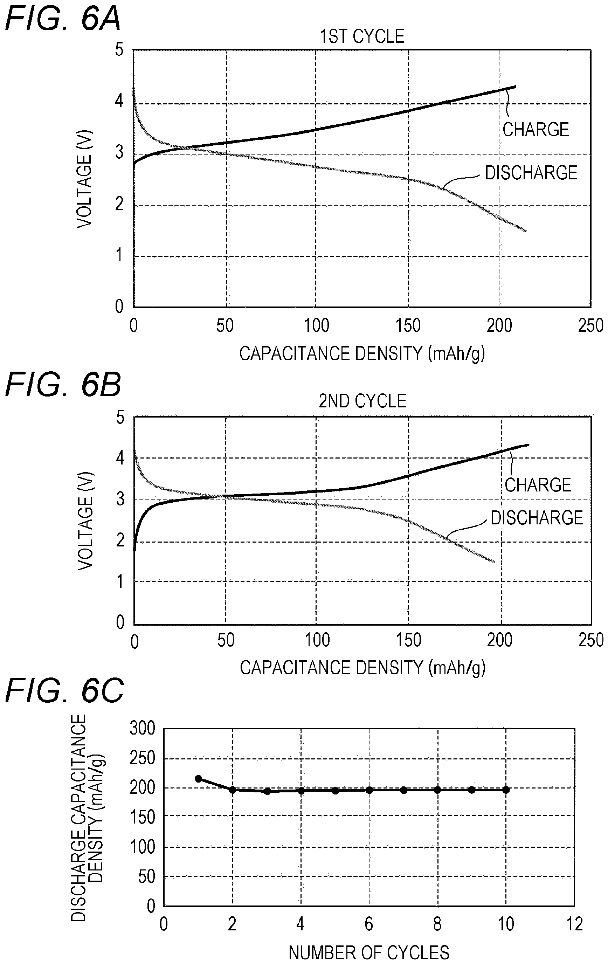

The same electrode as in Example 1 was immersed in the above-described lithium solution for 1.8 days. Thereafter, the lithium secondary battery of Example 4 was produced in the same manner as in Example 1, and a charging and discharging test was performed. The results are illustrated in Fig. 6A, Fig. 6B, and Fig. 6C. Fig. 6A, Fig. 6B, and Fig. 6C are graphs illustrating the test results of the same items as Fig. 3A, Fig. 3B, and Fig. 3C, respectively.

As illustrated in Fig. 6A, the lithium secondary battery of Example 4 was in a discharged state immediately after assembly and was able to be charged from the first cycle. As illustrated in Fig. 6C, the discharge capacitance density barely changed even when charging and discharging was repeated for 10 cycles.

The substance amount of Li doped into MnO₂ during the reduction treatment and the valence of Mn were calculated from a charge capacitance density at the first cycle (210.54 mAh/g). As a result, the substance amount of doped Li was 0.683 mol with respect to 1 mol of MnO₂. The valence of Mn after the reduction treatment was 3.316. The time for the reduction treatment in Example 4 was 1.8 days, which was significantly shorter than the time for the reduction treatment in Example 1.

### (Reference Example 1)

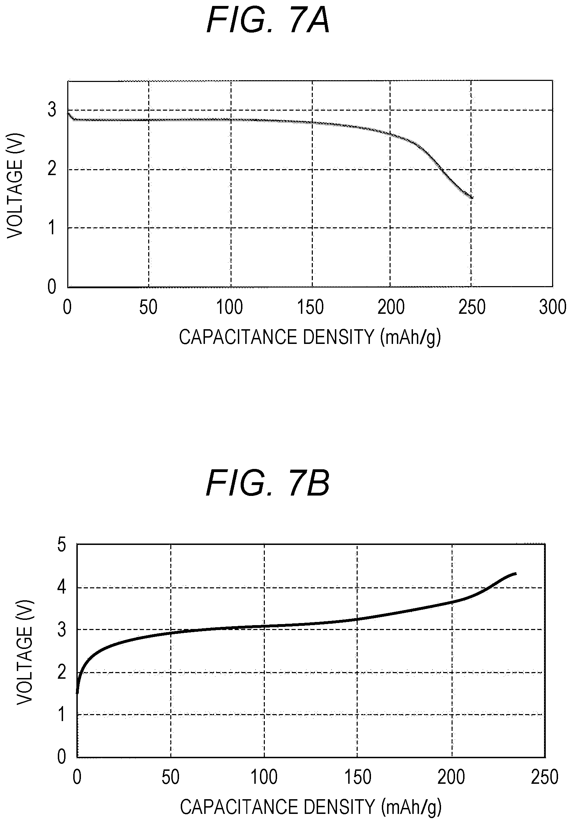

PVdF as a binder, γ-β-MnO₂ powder, and a solvent were mixed to prepare a slurry. The slurry was applied to an Al current collector to form a coating film. The coating film was dried and rolled to obtain an electrode having a size of 2 cm × 2 cm. The lithium secondary battery of Reference Example 1 was produced in the same manner as in Example 1 except that this electrode was used as a positive electrode, then the charging and discharging test was performed. However, the test began with discharging. The results are illustrated in Fig. 7A and Fig. 7B.

Fig. 7A is a discharge curve at a first cycle of the lithium secondary battery of Reference Example 1. Fig. 7B is a charge curve at the first cycle of the lithium secondary battery of Reference Example 1. The substance amount of Li doped into the positive electrode in the discharge at the first cycle and the valence of Mn were calculated from the discharge capacitance density at the first cycle. As a result, the substance amount of doped Li was 0.929 mol with respect to 1 mol of MnO₂. The valence of Mn was 3.071.

### (Powder X-ray diffraction measurement)

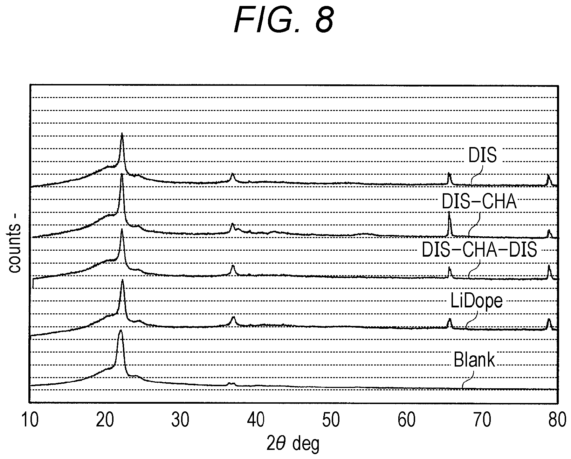

The positive electrode active material of Example 2 and the positive electrode active material of Reference Example 1 were subjected to powder X-ray diffraction measurement. The results are illustrated in Fig. 8. The relationship between the results illustrated in Fig. 8 and the samples is as follows.
DIS... after the initial discharge of Reference Example 1
DIS-CHA... after the initial charge of Reference Example 1
DIS-CHA-DIS... after the discharge at the second cycle of Reference Example 1
LiDope... after the charging and discharging of Example 2 (after Li doping)
Blank... polyethylene bag used during measurement

It is understood from the results illustrated in Fig. 8 that the samples of "DIS", "DIS-CHA-DIS", and "LiDope" have the same structure.

### INDUSTRIAL APPLICABILITY

The technique of the present disclosure may be applied to a lithium secondary battery.

### REFERENCE MARKS IN THE DRAWINGS

- 10: lithium secondary battery
- 11: negative electrode current collector
- 12: negative electrode active material layer
- 13: negative electrode
- 14: positive electrode current collector
- 15: positive electrode active material layer
- 16: positive electrode
- 17: separator
- 18: exterior
- 19: non-aqueous electrolyte

## Claims

1. A positive electrode active material comprising LiₓMn_{y}O₂, wherein 1.012 ≥ x ≥ 0.683 and 0.91 ≤ y ≤ 1.0.

2. The positive electrode active material according to Claim 1, wherein a relationship of 1.012 ≥ x ≥ 0.864 is satisfied.

3. The positive electrode active material according to Claim 1 or 2, wherein a valence of Mn is between 2.987 and 3.316, inclusive.

4. The positive electrode active material according to any one of Claims 1 to 3, wherein the valence of Mn is between 2.987 and 3.136, inclusive.

5. A method for producing a positive electrode active material, comprising bringing MnO₂ into contact with a lithium solution of lithium metal dissolved in an organic solvent.

6. The method according to Claim 5, wherein MnO₂ comprises at least one selected from the group consisting of γ-β-MnO₂, ramsdellite, and β-MnO₂.

7. The method according to Claim 5 or 6, wherein the organic solvent comprises at least one selected from the group consisting of glyme and a chain carbonate.

8. The method according to Claim 5 or 6, wherein the organic solvent comprises at least one selected from the group consisting of triglyme, dimethoxyethane, and methyl ethyl carbonate.

9. The method according to Claim 5 or 6, wherein the organic solvent comprises a mixture of triglyme and methyl ethyl carbonate.

10. The method according to Claim 5 or 6, wherein the organic solvent comprises a mixture of dimethoxyethane and methyl ethyl carbonate.

11. The method according to any one of Claims 5 to 10, wherein the lithium solution further comprises an aromatic compound.

12. The method according to Claim 11, wherein the aromatic compound comprises benzophenone.

13. A lithium secondary battery comprising a positive electrode that includes the positive electrode active material according to any one of Claims 1 to 4.

14. The lithium secondary battery according to Claim 13, wherein the positive electrode comprises a positive electrode current collector made of aluminum.

15. The lithium secondary battery according to Claim 13 or 14, wherein the lithium secondary battery is in a discharged state upon completion of assembly and starts from charging.

16. The lithium secondary battery according to any one of Claims 13 to 15, further comprising a negative electrode that includes graphite.

17. The lithium secondary battery according to Claim 16, wherein the negative electrode does not contain lithium upon completion of assembly.
